# EUROPÄISCHE PATENTSCHRIFT

(11) **EP 2 824 364 B1**
(45) Veröffentlichungstag und Bekanntmachung des Hinweises auf die Patenterteilung: **22.11.2017**
(21) Anmeldenummer: 13003469.7
(22) Anmeldetag: 09.07.2013
(51) Int. Cl.: F16G 13/06

(54) **Gelenkkette mit reibungsreduziertem Laschenrücken**
Articulated chain with reduced friction strap backs
Chaîne articulée avec crêtes d'articulation à frottement réduit

(43) Veröffentlichungstag der Anmeldung: 14.01.2015
(73) Patentinhaber: iwis motorsysteme GmbH & Co. KG, 81369 München (DE)
(72) Erfinder: Belmer, Stefan, 85646 Anzing (DE); Mölter, Rolf, 82041 Oberhaching (DE)
(74) Vertreter: Grünecker Patent- und Rechtsanwälte PartG mbB

(56) Entgegenhaltungen:
- EP-A2- 1 878 944
- EP-A2- 2 623 819
- DE-A1-102009 052 211
- US-A- 2 182 443
- US-A1- 2011 263 369
- US-A1- 2012 316 020

## Beschreibung

Die Erfindung betrifft eine Gelenkkette mit abwechselnd mittels eines Kettengelenks miteinander verbundenen Innen- und Außenkettengliedern und einer Laufrichtung, wobei jedes Innenkettenglied mindestens eine Innenlasche und jedes Außenkettenglied mindestens zwei Außenlaschen und zwei diese miteinander verbindende Kettengelenkbolzen aufweist, jeder Kettengelenkbolzen ist in einer Bolzenöffnung der zugehörigen Außenlaschen drehfest angeordnet und erstreckt sich zum Bilden eines Kettengelenks durch eine Gelenköffnung des zugehörigen Innenkettengliedes, wobei die Innen- und/oder Außenkettenglieder mit einer Spann- und/oder Führungsschiene zur Anlage bringbare Laschenrücken aufweisen.

Gelenkketten werden im Automobilsektor häufig als Steuerketten in Verbrennungsmotoren verwendet und koppeln die Kurbelwelle mit der mindestens einer Nockenwelle. Derartige Steuertriebe weisen im Zugtrum eine Führungsschiene und im Lostrum eine mittels eines Kettenspanners andrückbare Spannschiene auf. Beim Kontakt zwischen der Gelenkkette mit den Spann- und Führungsschienen entsteht Reibung, die wiederum zu einer Verlustleistung und damit zu einem CO₂-Ausstoß des Verbrennungsmotors führt. In der Technik ist es bekannt, mittels einer nach innen gewölbten Form des Laschenrückens die Reibung zwischen den Schienen und der Kette zu verringern.

Eine solche Kette ist z.B. aus der DE 199 07 865 A1 bekannt. Die bei dieser Kette verwendeten Kettenlaschen weisen Laschenrücken auf, die zwei im Abstand zueinander angeordnete Kontaktabschnitte haben und dazwischen einen Schmierölfaufnahmeraum ausbilden. Hierdurch wird die Kontaktfläche zur Spann- und/oder Führungsschiene reduziert. Gleichzeitig soll sich zwischen den beiden Kontaktabschnitten durch die zurückversetzte Form des Laschenrückens ein Schmierölkissen ausbilden.

Eine ähnliche Ausgestaltung ist aus der US 7,963,872 B2 bekannt. Auch diese Laschen weisen zwei im Abstand zueinander angeordnete Kontaktabschnitte auf, zwischen denen eine die Schmiermittel optimierende, zurückversetzte Kontur vorhanden ist.

Weiter ist aus der DE 10 2010 013 572 A1 eine Gelenkkette bekannt, bei der die Kettenlaschen konvexe Laschenrücken für einen Gleitkontakt mit den Spann- und Führungsschienen eines Kettentriebs aufweisen, wobei die Form der konvexen Laschenrücken asymmetrisch ist. Die asymmetrische Form des Laschenrückens ermöglicht bei einem Kontakt der Kettenlaschen mit den Spann- oder Führungsschienen ein Schwenken in Richtung der Laufrichtung und der Schiene, um den Widerstand des Gleitkontakts zu reduzieren.

Aus der DE102009052211A1 ist die Verwendung einer Steuerkette in einem Steuerkettentrieb eines Verbrennungsmotors gemäß dem Oberbegriff des Anspruchs 1 bekannt. Es ist daher die Aufgabe der vorliegenden Erfindung, eine eingangs genannte Gelenkkette bereitzustellen, die eine verbesserte Reibungsreduktion zwischen Kette und einer Spann- und/oder Führungsschiene bereitstellt.
Diese Aufgabe wird erfindungsgemäß bei einer gattungsgemäßen Gelenkkette dadurch gelöst, dass der Laschenrücken einen in Laufrichtung vorderen Bereich und einen daran anschließenden hinteren Bereich aufweist, wobei der hintere Bereich der Laschenrücken von zumindest einem Teil der Innen- und/oder Außenlaschen in einem Winkel zu einer zwischen den Mittellinien der Bolzenöffnungen bzw. der Gelenköffnungen aufgespannten Ebene verläuft und die Spitze des Winkels in Richtung der Laufrichtung L weist, während der vordere Bereich der Laschenrücken im Wesentlichen parallel zu der zwischen den Mittellinien aufgespannten Ebene verläuft. Hierdurch wird eine Art Öffnungstrichter ausgeformt, in dem das zwischen Gleit- und/oder Führungsschiene und dem vorderen Bereich der Kette hindurchgepresste Öl aufgrund des Ablösens des Laschenrückens aufgewirbelt wird und sich so ein Schmierpolster ausbildet, das zumindest dem vorderen (in Laufrichtung gesehen) Bereich der nachfolgenden Lasche besser schmiert und so eine Reduzierung der Reibung um bis zu 8 % ermöglicht. Laschen weisen an ihren Stirnseiten üblicherweise eine Abrundung auf. Diese Abrundungen sind jedoch nicht Bestandteil des Laschenrückens. Unter Laschenrücken werden hier nur die geraden Laschenabschnitte verstanden, die sich im Wesentlichen zwischen den beiden Mittellinien der Bolzenöffnung bzw. der Gelenköffnung bis zu den Abrundungen erstrecken. Das bedeutet aber auch, dass der in Laufrichtung hintere Abschnitt der Lasche so zurückversetzt ist, dass dieser im Wesentlichen nicht in Berührung mit der Spann- und/oder Führungsschiene kommt. Im Gegensatz hierzu ist bei der DE 199 07 865 A1 und der US 7,963,872 B2 jeweils eine Kontaktfläche im vorderen Bereich, aber auch in den entsprechenden hinteren Bereichen vorhanden. Der konvexe Laschenrücken der DE 10 2010 013 572 A steht in Abhängigkeit der Zugkraft der Kette im hinteren Teil des Laschenrückens in Berührung mit der Spann- und/oder Führungsschiene. Die erfindungsgemäße Ausgestaltung kann sowohl bei Hülsenketten, Rollenketten oder Zahnketten Anwendung finden.

In einer zweckmäßigen Ausführungsform kann der hintere Bereich der Laschenrücken, der in einem Winkel verläuft, sich über eine in Laufrichtung ermittelte Distanz von 50 % bis 90 % des Teilungsabstands der Mittellinien der Bolzenöffnungen bzw. der Gelenköffnungen, erstrecken. Neben einer ausreichenden Öffnungsweite des durch den hinteren geneigten Bereichs zum Laschenrücken gebildeten Trichters, um ein sicheres Ablösen des Ölfilms zu ermöglichen, bewirkt eine entsprechende Breite des vorderen Bereichs von mindestens 10 % des Teilungsabstands ein ausreichendes Zusammenpressen des Ölfilms, um beim Ablösen des Ölfilms im Öffnungstrichter ein Aufwirbeln der Ölschicht und so ein besseres Gleiten zu ermöglichen. Weiter ist die Auflagefläche des vorderen parallelen Bereichs der Laschenrücken, die im Wesentlichen parallel zu der zwischen den Mittellinien aufgespannten Ebene verläuft, auf den Spann- und/oder Führungsschienen im Gegensatz zu herkömmlichen Laschen reduziert, wodurch sich die der Reibung ausgesetzte Fläche verringert. Auch wenn die theoretische Bestimmung der Reibkraft keine Abhängigkeit zur Kontaktfläche beinhaltet, scheint es in der Praxis zusätzliche Effekte zu geben, die eine Reibungsreduktion durch die Reduzierung der Reibfläche ermöglichen. Eine geringere Reibung bedeutet auch eine geringere Verlustleistung, die beim Einsatz der erfindungsgemäßen Gelenkkette in einem Verbrennungsmotor zu einem geringeren CO₂-Ausstoß führt.

Bevorzugt kann sich der hintere Bereich der Laschenrücken, der in einem Winkel verläuft, nahezu über den gesamten Teilungsabstand der Mittellinien der Bolzenöffnungen bzw. der Gelenköffnungen erstrecken. Das bedeutet, dass im Wesentlichen der gesamte Laschenrücken im vorgegeben Winkel schräg verläuft. Eine solche Lasche hat entsprechend nur in dem sehr kleinen in Laufrichtung vorderen Bereich des Laschenrückens Kontakt mit der entsprechenden Schiene. Es ist aber zu erwarten, dass sich im Betrieb ein verstärktes Ölpolster aufgrund einer erhöhten Aufwirbelung ausbildet, so dass ein besseres Aufgleiten der Kette und entsprechend eine hohe Reibungsreduktion erfolgt.

Günstigerweise kann gemäß einer Variante der Winkel im Bereich von 2° bis 10° oder weiter eingeschränkt, im Bereich von 3° bis 7° liegen. Dieser relativ geringe Winkelbereich reicht aus, um den gewünschten reibungsmindernden Effekt zu erzielen.

Gemäß einer Ausführungsform können ausschließlich Innenlaschen oder Außenlaschen einen im Winkel verlaufenden hinteren Bereich der Laschenrücken aufweisen und die Laschenrücken der angrenzenden Außenlaschen oder Innenlaschen im Wesentlichen parallel zu der zwischen den Mittellinien der zugehörigen Bolzenöffnungen bzw. Gelenköffnungen aufgespannten Ebene verlaufen. Hierbei kommt es zwischen den Außenlaschen bzw. Innenlaschen mit einem einteiligen parallelen Laschenrücken und den Schienen zu dem üblichen Gleitkontakt, bei dem der parallele Laschenrücken an den Schienen entlang gleitet. Zur Reibungsverminderung sind allerdings die angrenzenden Innenlaschen bzw. Außenlaschen mit einem teilweisen schrägen Laschenrücken versehen. Hierdurch bleibt die Stabilität bei den zumeist hochdynamisch betriebenen Kettentrieb erhalten und es ist eine sichere Führung durch die Führungs- und/oder Spannschienen gewährleistet. Im Hinblick auf das Schwingungsverhalten des Kettentriebs führt das Ablösen und Aufwirbeln des Ölfilms unter dem hinteren Bereich der abgeschrägten Laschenrückens zu einer zusätzlichen Anregung durch die senkrecht zur Laufrichtung ausgeführte Auf- und Abbewegung der Kette. Diese zusätzliche geringe Schwingungsanregung der Gelenkkette führt insgesamt zu einer Verbesserung des NVH-Verhaltens des Kettentriebs im Verbrennungsmotor.

Des Weiteren können die angrenzenden Laschenrücken benachbarte Innen- und Außenlaschen einen hinteren im Winkel verlaufenden Bereich und einen vorderen im Wesentlichen parallel verlaufenden Bereich aufweisen. Dies ermöglicht die Verwendung gleicher Laschenformen für die Außenkettenglieder und Innenkettenglieder der Gelenkkette. Darüber hinaus vergleichmäßigt und beschleunigt sich die Auf- und Abbwegung der Gelenkkette und damit auch die zusätzliche Anregung im Kettentrieb. Die Höhen der Innen- und Außenlaschen sind bevorzugt in dem in Laufrichtung vorderen Bereich des Laschenrückens gleich hoch. Ausgehend von diesem vorderen Bereich verringert sich dann entgegen der Laufrichtung die Höhe der Innenlaschen. Hier sind zumindest in den in Laufrichtung vorderen Bereichen der Laschenrücken der Innenlaschen und Außenlaschen sämtliche geraden Abschnitte parallel nebeneinander liegender Laschen auf gleicher Höhe und stabilisieren gemeinsam den Lauf der Kette entlang der jeweiligen Schiene.

Bevorzugt können die Außen- und Innenlaschen eine identische Außenumfangskontur aufweisen. Bei identischer Außenumfangskontur können sowohl bei den Innen- als auch bei den Außenlaschen zum Teil identische Stanzwerkzeuge bei der Herstellung zum Einsatz kommen. Hierbei ist zu beachten, dass die Kontur der Bolzenöffnungen bzw. der Gelenköffnungen nicht zur Außenumfangskontur dazuzählt.

Hierbei ist es besonders günstig, wenn die Außen- und Innenlaschen eine zu der zwischen den Mittellinien aufgespannten Ebene spiegelbildliche Außenumfangskontur aufweisen. Das bedeutet, dass die Laschen auch um 180° gedreht verbaut werden können und die Laschenrücken auf beiden Längsseiten in Laufrichtung identisch ausgebildet sind. Sofern es sich dabei um nicht verzahnte Laschen handelt, könnte eine solche Kette sowohl auf ihrer Innen- als auch auf ihrer Außenseite an einer Schiene reibungsvermindert entlang laufen.

Damit beim maschinellen Herstellen solcher Ketten das gedrehte Verbauen der Laschen vereinfacht ist, kann jede Lasche zu Sortierzwecken entsprechend oberhalb bzw. unterhalb der aufgespannten Ebene eine vor- oder zurückspringende Unregelmäßigkeit im Außenkonturverlauf aufweisen, zusätzlich zu dem schräg verlaufenden hinteren Bereich und dem parallelen vorderen Bereich des Laschenrückens. Hierbei kann es sich um eine Kerbe oder eine Einbuchtung handeln, die in geeigneter Weise abgetastet wird und in der Folge für die richtige Orientierung sorgt.

Bei einer bevorzugten Ausgestaltung kann das Innenkettenglied zumindest zwei Innenlaschen und zwei diese miteinander verbindende, die jeweiligen Gelenköffnungen formende Gelenkhülsen aufweisen, die in entsprechenden Hülsenöffnungen der zugehörigen Innenlaschen drehfest angeordnet sind und durch die sich der jeweils zugehörige Kettenbolzen des zugehörigen Außenkettenglieds erstreckt. Zur Reduzierung des Verschleißes und des Kontaktgeräusches beim Eingriff der Kettengelenke in die Kettenräder eines Kettentriebs können auf den Gelenkhülsen zusätzliche Rollen vorgesehen sein.

Des Weiteren bezieht sich die Erfindung auch auf einen Kettentrieb, insbesondere einen Steuerkettentrieb eines Verbrennungsmotors, mit einem Antriebskettenrad und mindestens einem Abtriebskettenrad mit einer um die Kettenräder herumgelegten zahnlosen Gelenkkette nach einem der vorangegangenen Ansprüche und mindestens einer, an der Gelenkkette anliegenden Spann- und/oder Führungsschiene.

Die vorliegende Erfindung betrifft außerdem zur Verwendung einer Gelenkkette nach einem der vorangegangenen Ansprüche in einem Kettentrieb, insbesondere in einem Steuerkettentrieb eines Verbrennungsmotors, wobei die um ein Antriebskettenrad und mindestens ein Abtriebskettenrad des Kettentriebs herum gelegte Gelenkkette mit dem zweiteiligen Laschenrücken an einer Spann- und/oder Führungsschiene anliegt.

Im Folgenden werden Ausführungsbeispiele der vorliegenden Erfindung anhand von Zeichnungen näher erläutert. Es zeigen:
- Fig. 1: einen Steuerkettentrieb gemäß der vorliegenden Erfindung,
- Fig. 2: eine Draufsicht einer ersten Ausführungsform der erfindungsgemäßen Gelenkkette,
- Fig. 3: eine Draufsicht auf die Gelenkkette aus Fig. 2,
- Fig. 4: eine Draufsicht auf ein Innenkettenglied der Gelenkkette aus Fig. 2,
- Fig. 5: eine Draufsicht auf ein Außenkettenglied der Gelenkkette aus Fig. 2,
- Fig. 6: eine Draufsicht einer zweiten Ausführungsform der erfindungsgemäßen Gelenkkette,
- Fig. 7: eine Seitenansicht der Gelenkkette aus Fig. 6,
- Fig. 8: eine perspektivische Ansicht einer dritten Ausführungsform der erfindungsgemäßen Gelenkkette, und
- Fig. 9: eine Seitenansicht der Gelenkkette aus Fig. 8.

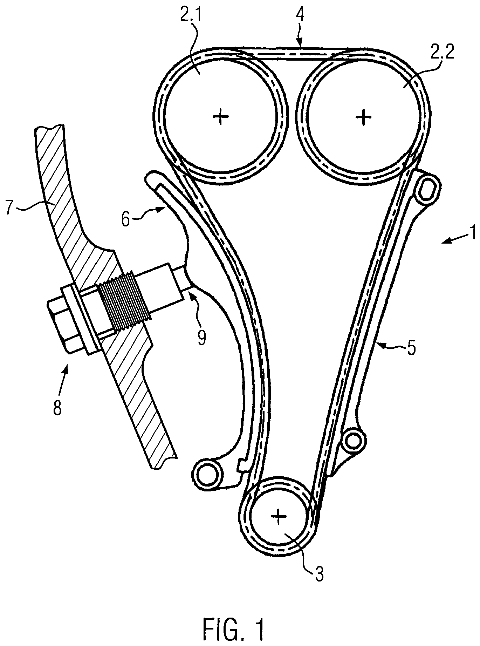

In Fig. 1 ist ein Steuerkettentrieb für einen Verbrennungsmotor dargestellt. Der Steuerkettentrieb 1 umfasst zwei oben liegende Nockenwellenkettenräder 2.1 und 2.2, ein unten liegendes Kurbelwellenkettenrad 3, eine um diese geschlungene Steuerkette 4, eine Führungsschiene 5 und eine schwenkbar angeordnete, mittels eines in das Motorgehäuse 7 eingeschraubten Kettenspanners 8 angedrückte Spannschiene 6. Der Kettenspanner 8 ist bevorzugt an die Motorölhydraulik angeschlossen, so dass sein Spannkolben 9 hydraulisch auf die schwenkbar angeordnete Spannschiene 6 aufdrückt. Sowohl die Gleitschiene 5 als auch die Spannschiene 6 liegen jeweils mit ihren Gleitbelägen an den Laschenrücken der Kettenlaschen 12, 15 der an ihnen entlang laufenden Steuerkette 4 an. Hierdurch entstehen Reibverluste, die aufgrund der Bauweise der im nachfolgenden beschriebenen Kettenausführungsformen vermindert sind.

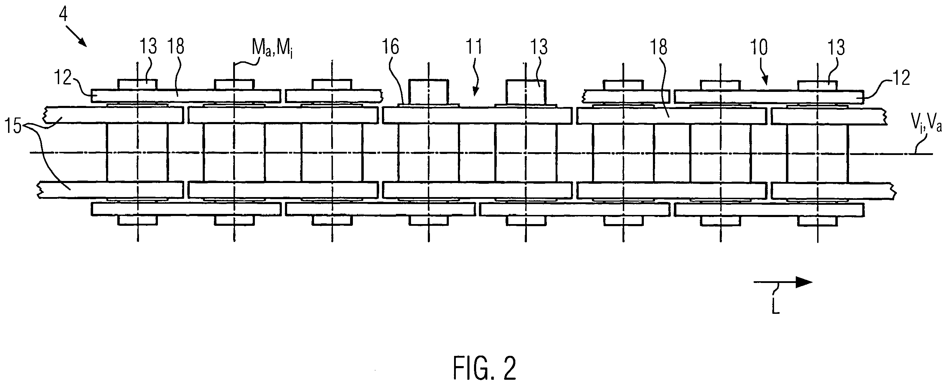

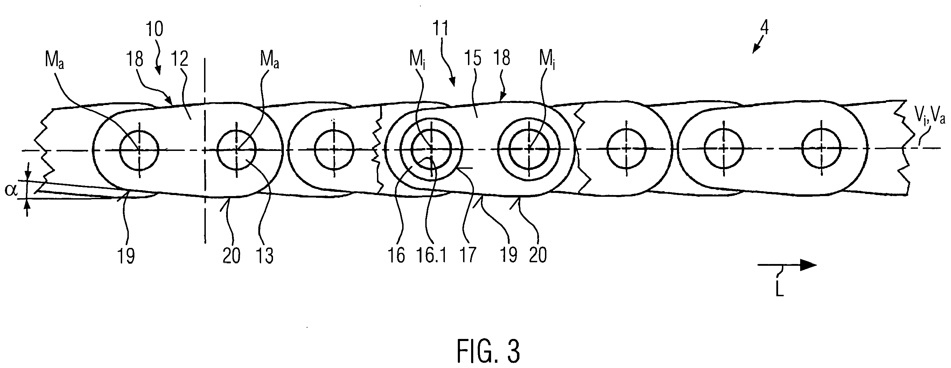

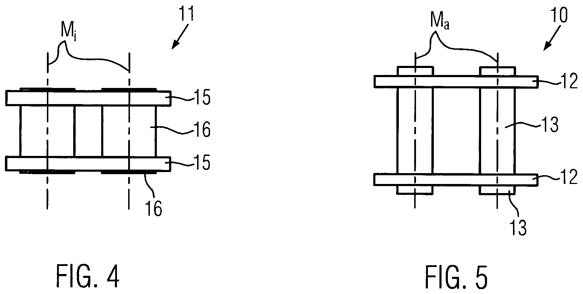

Die anhand der Fig. 2 bis 5 beschriebene erste Ausführungsform der Steuerkette 4 umfasst abwechselnd mittels eines Kettengelenks miteinander verbundene Außenkettenglieder 10 und Innenkettenglieder 11. Jedes Außenkettenglied 10 besteht aus zwei im Abstand zueinander angeordneten Außenlaschen 12 und zwei diese miteinander verbindenden zylindrisch ausgeformten Kettengelenkbolzen 13. Hierzu sind die Kettengelenkbolzen 13 in zugehörige Bolzenöffnungen 14 in den Außenlaschen 12 eingepresst, so dass sie leicht überstehen. Jedes Innenkettenglied 11 besteht aus zwei im Abstand zueinander angeordneten Innenlaschen 15, die mittels zweier, im Abstand zueinander angeordneter Gelenkhülsen 16 miteinander verbunden sind. Hierzu sind die Gelenkhülsen 16 in entsprechende Hülsenöffnungen 17 der Innenlaschen 15 eingepresst. Die Gelenkhülsen 16 sind üblicherweise aus einem Blechstreifen gerollt, so dass eine Stoßnaht entsteht, in deren Mitte eine Schmieröffnung vorhanden ist.

Ein Kettengelenkbolzen 13 eines Außenkettengliedes 10 und eine zugehörige Gelenkhülse 16 eines Innenkettengliedes 11, durch die sich dieser Kettengelenkbolzen 13 erstreckt, formen gemeinsam ein Kettengelenk. Die Innenseite der Gelenkhülse 16 formt somit die Gelenköffnung 16.1.

In der in den Figuren 2 bis 5 dargestellten Ausführungsform sind die Außenumfangskonturen der Innenlaschen 15 und der Außenlaschen 12 identisch, so dass diese, wenn sie richtig herum orientiert aufeinander gelegt werden, am Umfang deckungsgleich sind. Lediglich die Dicke der Innenlaschen 15 ist aus Festigkeitsgründen etwas größer, weil für das Befestigen der Gelenkhülsen 16 eine gegenüber der Bolzenöffnung 14 größere Hülsenöffnung 17 erforderlich ist. Jede Außenlasche 12 und Innenlasche 15 weist im Außenkonturverlauf auf der Oberseite und der Unterseite einen zweiteiligen Laschenrücken 18 auf, mit einem in Laufrichtung L vorderen Bereich 20 und einen sich daran anschließenden hinteren Bereich 19. Der hintere Bereich 19 verläuft gegenüber der zwischen den Mittellinien M_{a,} Mᵢ der Bolzenöffnungen 14 bzw. der Gelenköffnung 16 aufgespannten Ebene in einem Winkel a, wobei sich der hintere Bereich 19 über die den Teilungsabstand begrenzende Mittellinie M_{a,} Mᵢ hinaus erstreckt, da die in Laufrichtung L hintere Stirnseite der Außenlaschen 12 und Innenlaschen 15 einen geringen Radius aufweist, so dass sich der Laschenrücken 18 über den eigentlichen Teilungsabstand zwischen den Mittellinien M_{a,} Mᵢ hinaus erstreckt. Der kleinere vordere Bereich 20 der Laschenrücken 18 ist parallel zu der zwischen den Mittellinien M_{a,} Mᵢ aufgespannten Ebene.

Die zwischen den Mittellinien Mᵢ der Innenlaschen aufgespannte Ebene Vᵢ teilt die jeweilige Innenlache 15 in einen oberhalb der Ebene Vᵢ liegenden Laschenbereich und einen unterhalb der Ebene Vᵢ liegenden Laschenbereich ein, die hier zueinander symmetrisch sind. Die Ebene Vᵢ verläuft senkrecht zur Zeichnungsebene der Fig. 2 bis 5, so dass beide Mittellinien Mᵢ in der Ebene Vᵢ liegen. Die Außenkontur der Außenlaschen 12 ist identisch zu den Innenlaschen 15. Deshalb teilt eine Ebene Vₐ, die sich zwischen den Mittellinien Mₐ und der Bolzenöffnungen 14 aufspannt, die Außenlasche 12 in einen oberhalb der Ebene Vₐ befindlichen Laschenbereich und einen unterhalb der Ebene Vₐ befindlichen symmetrischen Laschenbereich.

Je nach Ausgestaltung des Kettentriebs 1 kommen die Laschenrücken 18 der Außenlaschen 12 und Innenlaschen 15 auf der Oberseite und/oder Unterseite der Laschen 12, 15 zur Anlage mit der Führungsschiene 5 und Spannschiene 6 des Steuerkettentriebs 1. Dabei ist der gerade vordere Bereich 20 der Laschenrücken 18 in Kontakt mit der Gleitfläche der Führungsschiene 5 und/oder Spannschiene 6, während der hintere Bereich 19 durch die Abschrägung des Laschenrückens 18 mit einem Winkel a, der sich entgegen der Laufrichtung L öffnet, zunehmend von der Gleitfläche absteht. Im gezeigten Ausführungsbeispiel beträgt der Winkel 5° (und liegt somit im Bereich von 2° bis 10°, bevorzugt 3° bis 7°). In einer alternativen Ausführung weist nur die Unterseite der Außenlaschen 12 einen hinteren Bereich 19 mit einer Neigung im Winkel α auf, wohingegen bei den Innenlaschen 15 nur die Oberseite einen um den Winkel α geneigten hinteren Bereich 19 aufweist. In den Figuren ist der Winkel α ausgehend von einer in Zeichnungsebene liegenden Parallelen zur jeweiligen Ebene Vᵢ und Vₐ dargestellt.

Die Verbauung der Außenlaschen 12 und Innenlaschen 15 erfolgt derart, dass die Spitze des Winkels α in Laufrichtung L ausgerichtet ist. Die Oberseite der Außenlaschen 12 und die entsprechend zugehörige Oberseite der Innenlasche 15 befinden sich nur im vorderen Bereich 20 auf gleicher paralleler Höhe, die oberhalb der Mittellinie Mᵢ der hinteren Hülsenöffnung 17 der Innenlasche 15 und der vorderen Bolzenöffnung 14 der Außenlasche 12 parallel dazu verläuft. Ausgehend von diesem vorderen Bereich 20 gleicher Höhe verringert sich dann die Höhe bzw. der Abstand des anschließenden hinteren Bereichs 19 zur Ebene Vᵢ aufgrund dessen Neigung um den Winkel a.

Wegen des Winkels des hinteren Bereichs 19 der zweiteiligen Laschenrücken 18 der Außenlasche 12 und der Innenlasche 15 entsteht durch den zunehmenden Abstand zwischen dem Laschenrücken 18 und der Führungsschiene 5 oder der Spannschiene 6 ein Abreißen bzw. Aufteilen des Ölfilms sowohl an der Kette 4 als auch der Führungsschiene 5 oder der Spannschiene 6, was wiederum zu einem Aufwirbeln der Ölschicht führt. Die aufgewirbelte Ölschicht führt zu einem leichten Aufschwimmen der Steuerkette 4 und damit auch zu einem besseren Gleitverhalten. Hierdurch verstärkt sich zusätzlich zur geringeren Reibungsfläche des vorderen Bereichs 20 der Laschenrücken 18 noch einmal der Effekt der Reibungsminderung.

Im vorliegenden Fall wird aus Kostengründen für sämtliche Laschen 12, 15 eine gleiche Außenkontur verwendet. Dies ist jedoch nicht zwingend erforderlich, solange auf der Seite der Kette 4, die an der Führungs- oder Spannschiene 5, 6 entlang gleiten soll, zumindest einige der Laschen 12, 15 einen entsprechend ausgeformten zweiteiligen Laschenrücken 18 mit einem abgeschrägten hinteren Bereich 19 aufweisen. Auf der nicht an den Führungsschienen 5 oder Spannschienen 6 entlang gleitenden Seiten können alle Laschen 12, 15 einen durchgängig geraden Laschenrücken 18 aufweisen, die im Geradeauslauf der Kette 4 bevorzugt auf gleicher Höhe liegen.

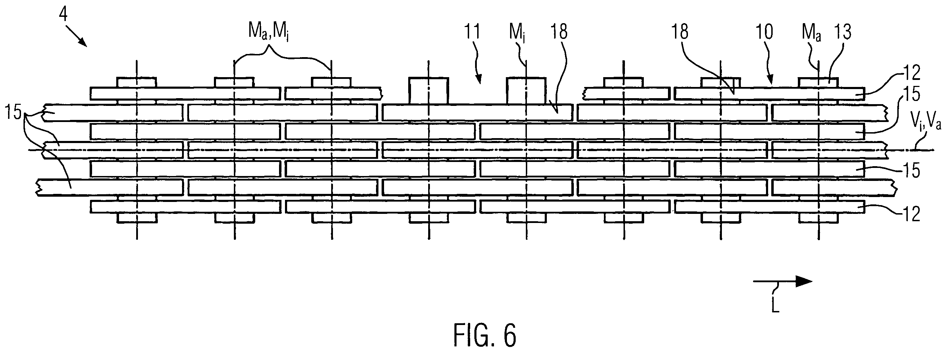

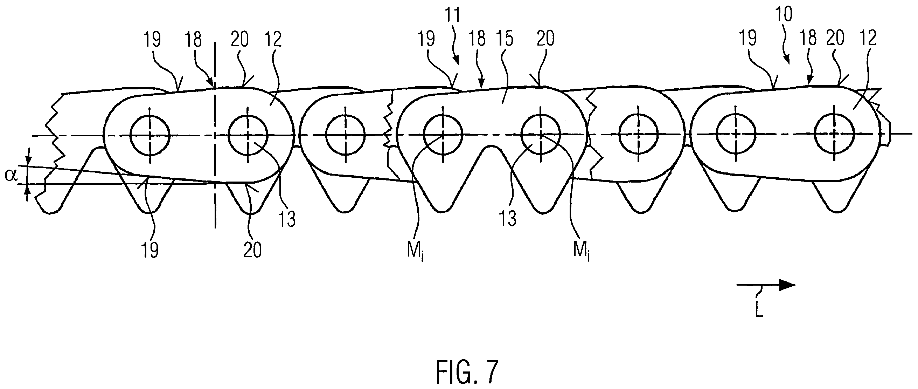

Darüber hinaus ist die Erfindung wie in den Figuren 6 und 7 dargestellt auch bei Zahnketten anwendbar. Bei Zahnketten ist es ohnehin von Vornherein vorgegeben, welche Seite der Laschen 12, 15 mit den Kettenrädern 2, 3 und welche mit den Führungs- bzw. Spannschienen 5, 6 in Wirkbeziehung kommen soll. Im Folgenden wird nur auf die Wesentlichen Unterschiede dieser Zahnkettenausführung zum vorangegangenen Ausführungsbeispiel eingegangen. Für bau- und wirkungsgleiche Elemente wird unter Verwendung der gleichen Bezugsziffern ergänzend auf die obige Beschreibung verwiesen. Wie in Fig. 7 zu erkennen, sind lediglich die Außenlaschen 12 der Außenkettenglieder 10 dieser Zahnkette symmetrisch aufgebaut mit einem jeweils zweiteiligen Laschenrücken 18, die jeweils einen hinteren Bereich 19 aufweisen, der in einem Winkel α zur Ebene Vₐ geneigt ist und einen vorderen parallelen Bereich 20, der parallel zur Ebene Vₐ verläuft. Demgegenüber weisen die Innenlaschen 15 der Innenkettenglieder 11 und die zwischengeordneten Innenlaschen 15 der Außenkettenglieder 10 nur an der Oberseite einen zweiteiligen Laschenrücken 18 mit einem geneigten hinteren Bereich 19 aus, während an der Unterseite Zähne zum Eingriff mit den Kettenrädern 2, 3 ausgebildet sind. Wie in Fig. 6 zu erkennen, ist die Zahnkette aus Laschenpaketen aufgebaut, wobei die Innenlaschen 15 der Innenkettenglieder 11 und der Außenkettenglieder 12 einander abwechseln.

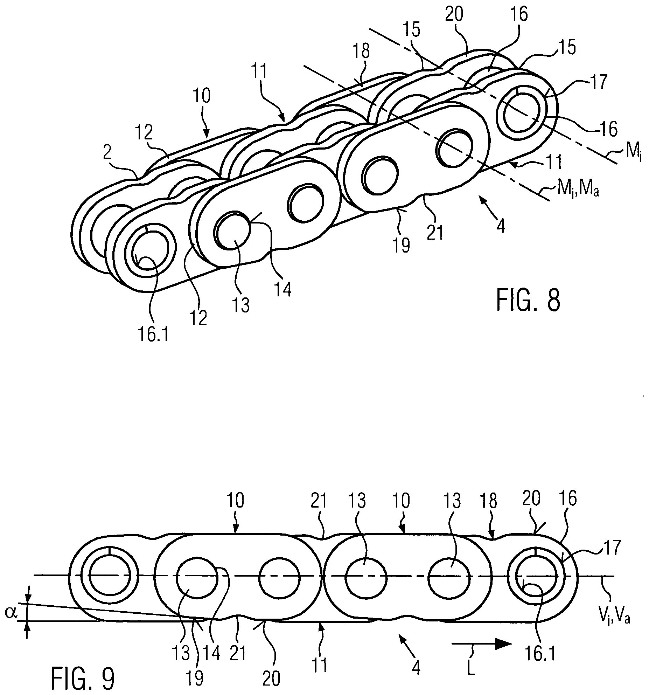

Im Folgenden wird anhand der Fig. 8 und 9 eine weitere Ausführungsform der vorliegenden Erfindung näher erläutert. Es wird im Folgenden nur auf die wesentlichen Unterschiede zum vorangegangenen Ausführungsbeispiel eingegangen werden, weshalb unter Verwendung gleicher Bezugsziffern für bau- und wirkungsgleiche Elemente ergänzend auf die obige Beschreibung verwiesen wird.

In der dargestellten Ausführungsform einer Gelenkkette 4 sind die zweiteiligen Laschenrücken 18 der Innenkettenlaschen 15 auf der Oberseite angeordnet, während die zweiteiligen Laschenrücken 18 der Außenkettenlaschen 12 auf der Unterseite angeordnet sind. Trotzdem sind die Außenumfangskonturen der Innenlaschen 15 und der Außenlaschen 12 identisch, so dass diese, wenn gleichartig orientiert, und richtig herum aufeinandergelegt werden, am Umfang deckungsgleich sind. Die zweiteiligen Laschenrücken 18 der Außenlaschen 12 und der Innenlaschen 15 weisen zwischen den geneigt ausgebildeten hinteren Bereichen 19 und den parallelen vorderen Bereichen 20 eine Unregelmäßigkeit im Außenkonturverlauf in Form einer abgerundeten Sortierkerbe 21 auf. Diese Sortierkerbe 21 hilft bei der Montage die entsprechenden Laschen 12, 15 richtig herum zu montieren.

Der wesentliche Unterschied dieser Bauform besteht darin, dass die Abschrägung des hinteren Bereichs 19 um den Winkel α im Übergang zum vorderen Bereich 20 eine Sortierkerbe 21 aufweist. Im vorliegenden Fall erstreckt sich die Abschrägung vom in Laufrichtung L hinteren Bereich 19 der jeweils zugehörigen Lasche bis zur Kerbe 21, wohingegen der in Laufrichtung L gesehen vordere Bereich 20 gerade (parallel zur Ebene Vᵢ bzw. Vₐ) verläuft. Bei der dargstellten Ausführungsform handelt es sich somit um die Abschrägung im Winkel α im hinteren Bereich 19 der Oberseite und bei der Außenlasche 15 um den (in Laufrichtung L gesehen) hinteren Bereich 19 der Unterseite, der im Winkel α geneigt ausgebildet ist, wohingegen der jeweils vordere Bereich 20 gerade (parallel zur Ebene Vᵢ bzw. Vₐ) ausgeführt ist. Bei dieser Ausführungsform kann sich auch die Kerbe 21 verstärkt auf den Schmiereffekt ausüben, weil sich hier am Ende des vorderen Bereichs 20 am Übergang zum hinteren Bereich 19 eine verstärkte Aufwirbelung stattfinden kann.

Die Oberseite der Außenlaschen 12 bildet einen parallelen Laschenrücken aus, der im Wesentlichen vollständig zur Anlage mit der Spann- oder Führungsschiene 5, 6 kommt. Bei den Innenlaschen 15 kommt aufgrund des schrägen Verlaufs des hinteren Bereichs 19 nur der vordere Bereich 20 oberhalb der in Laufrichtung L gesehenen vorderen Gelenköffnung 16.1 in Berührung mit der Spann- oder Führungsschiene 5, 6. Auf der in den Figuren 8 und 9 dargestellten Unterseite der Kette, ist die Unterseite der Innenlaschen 15 als paralleler Laschenrücken (zwischen den Mittellinien Mᵢ der zugehörigen Öffnung 16.1) ausgeführt ist, so dass es hier zu einem flächigen Anliegen an eine Schiene kommen kann. Die zweiteiligen Laschenrücken 18 auf der Unterseite der Außenlaschen 12 sind entsprechend ausgestaltet und kommen nur in dem in Laufrichtung L gesehenen vorderen Bereich 20 oberhalb der vorderen Bolzenöffnung 14 mit der jeweiligen Schiene zur Anlage. Diese Ausgestaltung führt dazu, dass die Schließrichtung der Kette vorgibt, ob hauptsächlich die geraden Laschenrücken der Innenkettenglieder 11 oder der Außenkettenglieder 12 mit den Schienen 5, 6 zur Anlage kommen. In aller Regel wird jedoch bevorzugt, dass die geraden Laschenrücken der Außenlaschen 12 mit den Schienen in Berührung kommen. Gemäß einer Variante können auch sämtliche Oberseiten der Innen- und Außenkettenglieder mit einem schrägen hinteren Bereich 19 versehen sein.

## Patentansprüche

1. Verwendung einer Steuerkette (4) mit abwechselnd mittels eines Kettengelenks miteinander verbundenen Innen- und Außenkettengliedern (10, 11) und mit einer vorgegebenen Laufrichtung (L) in einem Steuerkettentrieb (1) eines Verbrennungsmotors, wobei jedes Innenkettenglied (11) der Steuerkette (4) mindestens eine Innenlasche (15) und jedes Außenkettenglied (10) der Steuerkette (4) mindestens zwei Außenlaschen (12) und zwei diese miteinander verbindende Kettengelenkbolzen (13) aufweist, jeder Kettengelenkbolzen (13) ist in einer Bolzenöffnung (14) der zugehörigen Außenlaschen (12) drehfest angeordnet und erstreckt sich zum Bilden eines Kettengelenks durch eine Gelenköffnung (16.1) des zugehörigen Innenkettengliedes (11), wobei die Laschenrücken (18) der Innen- und/oder Außenkettenglieder (10,11) der Steuerkette (4) einen in Laufrichtung (L) vorderen Bereich (20) und einen daran anschließenden hinteren Bereich (19) aufweisen, wobei der vordere Bereich (20) der Laschenrücken (18) im Wesentlichen parallel zu einer zwischen den Mittellinien (Mₐ, Mᵢ) der Bolzenöffnungen (14) bzw. der Gelenköffnungen (16.1) aufgespannten Ebene verläuft und der hintere Bereich (19) der Laschenrücken (18) von zumindest einem Teil der Innen- und/oder Außenlaschen (12, 15) in einem Winkel (α) zu der zwischen den Mittellinien (Mₐ, Mᵢ) aufgespannten Ebene verläuft, und wobei der hintere Bereich (19) sich über die Mittellinie (Mₐ,Mᵢ) hinaus erstreckt und an eine hintere, in einem Radius verlaufende Stirnseite der Innen- und/oder Außenlaschen (15,12) anschliesst, **dadurch gekennzeichnet, dass** in einer bestimmungsgemäßen Verwendung der Steuerkette (4) die Spitze des Winkels (α) in Richtung der Laufrichtung (L) weist, und die Laschenrücken (18) der Innen- und/oder Außenkettenglieder (10,11) der Steuerkette (4) mit einer Spann- oder einer Führungsschiene (5,6) zur Anlage gebracht werden.

2. Verwendung der Steuerkette (4) nach Anspruch 1, **dadurch gekennzeichnet, dass** der hintere Bereich (19) der Laschenrücken (18), der in einem Winkel (α) verläuft, sich über eine in Laufrichtung (L) ermittelte Distanz von 50 % bis 90 % des Teilungsabstands der Mittellinien (Mₐ, Mᵢ) der Bolzenöffnungen (14) bzw. der Gelenköffnungen (16.1) erstreckt.

3. Verwendung der Steuerkette (4) nach Anspruch 1 oder 2, **dadurch gekennzeichnet, dass** der Winkel (α) im Bereich von 2° bis 10°, bevorzugt 3° bis 7°, liegt.

4. Verwendung der Steuerkette (4) nach einem der vorangegangenen Ansprüche, **dadurch gekennzeichnet, dass** ausschließlich Innenlaschen (15) oder Außenlaschen (12) einen im Winkel (α) verlaufenden hinteren Bereich (19) der Laschenrücken (18) aufweisen und die Laschenrücken (18) der angrenzenden Außenlaschen (12) oder Innenlaschen (15) im Wesentlichen parallel zu der zwischen den Mittellinien (Mₐ) der zugehörigen Bolzenöffnungen (14) aufgespannten Ebene verlaufen.

5. Verwendung der Steuerkette (4) nach einem der Ansprüche 1 bis 3, **dadurch gekennzeichnet, dass** die angrenzenden Laschenrücken (18) benachbarter Innen- und Außenlaschen (12, 15) einen im Winkel (α) verlaufenden hinteren Bereich (19) und einen im Wesentlichen parallel verlaufenden vorderen Bereich (20) aufweisen.

6. Verwendung der Steuerkette (4) nach einem der vorangegangenen Ansprüche, **dadurch gekennzeichnet, dass** die Außen- und Innenlaschen (12, 15) eine identische Außenumfangskontur aufweisen.

7. Verwendung der Steuerkette (4) nach einem der vorangegangenen Ansprüche, **dadurch gekennzeichnet, dass** die Außen- und Innenlaschen (12, 15) eine zu der zwischen den Mittellinien (Mₐ, Mᵢ) aufgespannten Ebene spiegelbildliche Außenumfangskontur aufweisen.

8. Verwendung der Steuerkette (4) nach einem der vorhergehenden Ansprüche, **dadurch gekennzeichnet, dass** das Innenkettenglied (11) mindestens zwei Innenlaschen (15) und zwei diese miteinander verbindende, die jeweiligen Gelenköffnungen (16.1) formende Gelenkhülsen (16) aufweist, die in entsprechenden Hülsenöffnungen (17) der zugehörigen Innenlaschen (15) drehfest angeordnet sind und durch die sich der zugehörige Kettengelenkbolzen (13) des zugehörigen Außenkettengliedes (10) erstreckt.

## Claims

1. A use of a timing chain (4) having alternating inner and outer chain links (10, 11) connected to one another by means of a chain hinge, and having a predetermined running direction (L) in a timing chain drive (4) of an internal combustion engine, each inner chain link (11) of the timing chain (4) comprising at least one inner link plate (15) and each outer chain link (10) of the timing chain (4) comprising at least two outer link plates (12) and two chain hinge pins (13) interconnecting the same, each chain hinge pin (13) being arranged in a rotationally fixed manner in a pin opening (14) of the associated outer link plates (12) and extending through a hinge opening (16.1) of the associated inner chain link (11) so as to form a chain hinge, and the link plate backs (18) of at least one of the inner and outer chain links (10, 11) of the timing chain (4) having in the running direction (L) a leading area (20) and an adjoining trailing area (19),
wherein the leading area (20) of the link plate backs (18) extending substantially parallel to a plane projected between the center lines (Mₐ, Mᵢ) of the pin openings (14) and hinge openings (16.1), respectively, and the trailing area (19) of the link plate backs (18) extending at least from one of the inner and outer link plates (12, 15) at an angle (α) to the plane projected between the center lines (Mₐ, Mᵢ), the trailing area (19) extends beyond one of the center lines (Mₐ, Mᵢ) and passes into the adjacent arcuated rear end face of said one of the inner and outer link plates (12, 15), **characterized in that** the vertex of the angle (α) pointing to the running direction (L) and in a designated use of the timing chain (4) the link plate backs (18) of of at least one of the inner and outer chain links (10, 11) of the timing chain (4) are adapted to be brought into contact with a tensioning rail (6) or a guide rail (5).

2. The use of a timing chain (4) according to claim 1, **characterized in that** the trailing area (19) of the link plate backs (18), which extends at an angle (α), extends over a distance determined in the running direction (L), said distance corresponding to 50 % to 90 % of the pitch of the center lines (Mₐ, Mᵢ) of the pin openings (14) and of the hinge openings (16.1), respectively.

3. The use of a timing chain (4) according to claim 1 or 2, **characterized in that** the angle (α) is in the range of from 2° to 10°, preferably from 3° to 7°.

4. The use of a timing chain (4) according to one of the preceding claims, **characterized in that** only inner link plates (15) or outer link plates (12) have a trailing area (19) of the link plate backs (18) extending at an angle (α), and the link plate backs (18) of the adjoining outer link plates (12) or inner link plates (15) extend substantially parallel to the plane projected between the center lines (Mₐ) of the associated pin openings (14).

5. The use of a timing chain (4) according to one of claims 1 to 3, **characterized in that** the adjoining link plate backs (18) of adjacent inner and outer link plates (12, 15) have a trailing area (19) that extends at an angle (α) and a leading area (20 that extends substantially parallel.

6. The use of a timing chain (4) according to one of the preceding claims, **characterized in that** the outer and inner link plates (12, 15) have identical outer circumferential contours.

7. The use of a timing chain (4) according to one of the preceding claims, **characterized in that** the outer and inner link plates (12, 15) have outer circumferential contours that are mirror-inverted with respect to the plane projected between the center lines (Mₐ, Mᵢ).

8. The use of a timing chain (4) according to one of the preceding claims, **characterized in that** the inner chain link (11) comprises at least two inner link plates (15) and two joint bushings (16), which interconnect said inner link plates (15) and define the respective hinge openings (16.1), said joint bushings (16) being arranged in a rotationally fixed manner in respective bushing openings (17) of the associated inner link plates (15) and the associated chain hinge pin (13) of the associated outer chain link (10) extending therethrough.

## Revendications

1. Utilisation d'une chaîne de distribution (4) comprenant des maillons de chaîne intérieurs et extérieurs (10, 11) reliés alternativement les uns aux autres au moyen d'une articulation de chaîne, et présentant un sens de marche (L) prédéterminé dans un entraînement à chaîne de distribution (1) d'un moteur à combustion interne, chaîne
dans laquelle chaque maillon de chaîne intérieur (11) de la chaîne de distribution (4) comprend au moins une éclisse intérieure (15), et chaque maillon de chaîne extérieur (10) de la chaîne de distribution (4) au moins deux éclisses extérieures (12) et deux axes d'articulation de chaîne (13) reliant celles-ci, et chaque axe d'articulation de chaîne (13) est agencé de manière fixe en rotation dans une ouverture d'axe (14) des éclisses extérieures (12) associées, et s'étend à travers une ouverture d'articulation (16.1) du maillon de chaîne intérieur (11) associé pour former une articulation de chaîne,
dans laquelle les dos d'éclisse (18) des maillons de chaîne intérieurs et/ou extérieurs (10, 11) de la chaîne de distribution (4) présentent, en se référant au sens de marche (L), une zone avant (20) et une zone arrière (19) s'y raccordant,
dans laquelle la zone avant (20) des dos d'éclisse (18) s'étend sensiblement de manière parallèle à un plan sous-tendu entre les lignes médianes (Ma, Mi) des ouvertures d'axes (14) et respectivement des ouvertures d'articulation (16.1), et la zone arrière (19) des dos d'éclisses (18) d'au moins une partie des éclisses intérieures et/ou extérieures (12, 15) s'étend de manière à former un angle (a) par rapport au plan sous-tendu entre les lignes médianes (Ma, Mi), et
dans laquelle la zone arrière (19) s'étend au-delà de la ligne médiane (Ma, Mi) et se raccorde à un côté frontal arrière sous forme de rayon des éclisses intérieures et/ou extérieures (12, 15)
**caractérisée en ce que** pour une utilisation conforme aux dispositions de la chaîne de distribution (4), le sommet de l'angle (α) est orienté dans la direction du sens de marche (L), et les dos d'éclisses (18) des maillons de chaîne intérieurs et/ou extérieurs (10, 11) de la chaîne de distribution (4) sont amenés en appui contre une glissière de mise en tension ou de guidage (5, 6).

2. Utilisation de la chaîne de distribution (4) selon la revendication 1, **caractérisée en ce que** la zone arrière (19) des dos d'éclisses (18), qui s'étend sous un angle (α), s'étend sur une distance déterminée dans la direction du sens de marche (L) de 50% à 90% de l'intervalle de pas des lignes médianes (Ma, Mi) des ouvertures d'axes (14) et respectivement des ouvertures d'articulation (16.1).

3. Utilisation de la chaîne de distribution (4) selon la revendication 1 ou la revendication 2, **caractérisée en ce que** l'angle (α) se situe dans une plage de 2° à 10°, de préférence de 3° à 7°.

4. Utilisation de la chaîne de distribution (4) selon l'une des revendications précédentes, **caractérisée en ce qu'**exclusivement des éclisses intérieures (15) ou des éclisses extérieures (12) présentent une zone arrière (19) des dos d'éclisse (18), qui s'étend selon l'angle (a), et les dos d'éclisse (18) des éclisses extérieures (12) ou des éclisses intérieures (15) adjacentes, s'étendent sensiblement de manière parallèle au plan sous-tendu entre les lignes médianes (Ma) des ouvertures d'axes (14) associées.

5. Utilisation de la chaîne de distribution (4) selon l'une des revendications 1 à 3, **caractérisée en ce que** les dos d'éclisses (18) adjacents d'éclisses intérieures et extérieures (12, 15) voisines, présentent une zone arrière (19), qui s'étend sous l'angle (a), et une zone avant (20), qui s'étend sensiblement de manière parallèle.

6. Utilisation de la chaîne de distribution (4) selon l'une des revendications précédentes, **caractérisée en ce que** les éclisses extérieures et intérieures (12, 15) présentent un contour périphérique extérieur identique.

7. Utilisation de la chaîne de distribution (4) selon l'une des revendications précédentes, **caractérisée en ce que** les éclisses extérieures et intérieures (12, 15) présentent un contour périphérique extérieur symétrique par rapport au plan sous-tendu entre les lignes médianes (Ma, Mi).

8. Utilisation de la chaîne de distribution (4) selon l'une des revendications précédentes, **caractérisée en ce que** le maillon de chaîne intérieur (11) comprend au moins deux éclisses intérieures (15) et deux douilles d'articulation (16), qui relient ces éclisses et forment les ouvertures d'articulation (16.1) respectives, et qui sont agencées de manière fixe en rotation dans des ouvertures de douille (17) respectives des éclisses intérieures (15) associées, et à travers lesquelles s'étend l'axe d'articulation de chaîne (13) associé du maillon de chaîne extérieur (10) correspondant.
